# EUROPÄISCHE PATENTSCHRIFT

(11) **EP 1 046 550 B1**
(45) Veröffentlichungstag und Bekanntmachung des Hinweises auf die Patenterteilung: **28.01.2004**
(21) Anmeldenummer: 00108006.8
(22) Anmeldetag: 19.04.2000
(51) Int. Cl.: B60R 21/20

(54) **Aufblasbare Kopfstütze**
Inflatable head restraint
Dispositif gonflable de retenue de la tête

(30) Priorität: 23.04.1999 DE 29907245 U
(43) Veröffentlichungstag der Anmeldung: 25.10.2000
(73) Patentinhaber: TRW Occupant Restraint Systems GmbH & Co. KG, 73553 Alfdorf (DE)
(72) Erfinder: Heilig, Alexander, 73550 Wissgoldingen (DE); Zink, Lothar, 73553 Alfdorf (DE)
(74) Vertreter: Kitzhofer, Thomas, Dipl.-Ing.

(56) Entgegenhaltungen:
- WO-A-98/57818
- DE-C- 19 733 030
- DE-C- 19 756 700
- PATENT ABSTRACTS OF JAPAN vol. 1999, no. 05, 31. Mai 1999 (1999-05-31) & JP 11 034711 A (ARACO CORP), 9. Februar 1999 (1999-02-09)

## Beschreibung

Die Erfindung betrifft eine Kopfstütze mit einem aufblasbaren Schutzkissen, das bei einem Heckaufprall aktiviert wird.

Eine gattungsgemäße Kopfstütze ist in der WO 98/57818 offenbart. Diese zeigt eine verstellbare Kopfstütze mit einem aufblasbaren Schutzkissen, mit einem Kopfstützenkorpus, einem Polster und einem das Polster abdeckenden Bezug, wobei das Schutzkissen zwischen Kopfstützenkorpus und Polster angeordnet ist und der Bezug an seinem Außenumfang über Anschlußmittel mit dem Kopfstützenkorpus verbunden ist und die Anschlußmittel durch einen insbesondere ringförmigen Anschlußarm gebildet sind, der mit seinem Innenrand am Außenumfang des Bezugs oder des Polsters anschließt und mit seinem Außenrand am Kopfstützenkorpus befestigt ist.

Bei einem Heckaufprall besteht für einen Fahrzeuginsassen eine erhöhte Verletzungsgefahr im Bereich der Halswirbelsäule durch Scher- und Biegekräfte, wenn der Kopf nicht an der Kopfstütze anliegt. Dies ist aber meist der Fall, da der Fahrzeuginsasse während der Fahrt häufig wechselnde und bequeme, aber unter dem Sicherheitsaspekt nicht optimale Sitzpositionen einnimmt. Um diese Verletzungsgefahr zu verringern, wurden Kopfstützen entwickelt, bei denen durch ein aufblasbares Schutzkissen die Auflagefläche des Polsters der Kopfstütze einerseits vergrößert, andererseits an den Kopf angenähert wird. Damit eine Bewegung des Polsters der Kopfstütze möglich ist, wird bei den bekannten Kopfstützen entweder ein elastischer Bezugstoff verwendet, oder es sind im Bezugstoff Nähte vorgesehen, die beim Aufblasen des Schutzkissens reißen, dadurch einen gefalteten Bereich des Bezugs freigeben und somit eine Ausdehnung des Schutzkissens ermöglichen. Dies hat zur Folge, daß nach einer Auslösung des Schutzkissens der Bezug irreversibel zerstört ist. Außerdem erfordert das Anbringen dieser Reißnähte einen zusätzlichen, nicht unerheblichen Aufwand bei der Herstellung der Kopfstütze. Bei Verwendung eines elastischen Bezugsstoffes ist die Auswahl des Materials infolge der geforderten Elastizitätseigenschaften wesentlich eingeschränkt, was sich auf die Kosten und auf die optischen Gestaltungsmöglichkeiten der Kopfstütze auswirkt.

Die Erfindung schafft eine Kopfstütze mit einem aufblasbaren Schutzkissen, bei der die Auflagefläche vergrößert und an den Kopf angenähert werden kann, ohne daß im Polster oder im Bezug Reißnähte vorzusehen sind oder ein elastischer Bezugstoff verwendet werden muß. Bei der erfindungsgemäßen Kopfstütze ist das Schutzkissen zwischen Kopfstützen-Korpus und Polster angeordnet, wobei der Bezug oder das Polster an seinem Außenumfang über einen ringförmigen Anschlußsaum mit dem Kopfstützen-Korpus verbunden ist, wobei der Anschlußsaum (5; 21) mit seinem Innenrand am Außenumfaag des Bezugs (4) oder des Polsters (3; 83) anschließt und mit seinem Außenrand am Kopfstützen-Korpus (7; 86) befestigt ist, wobei der Anschlußsaum (5; 21) bei inaktiviertem Schutzkissen (2) durch Spannmittel (22; 40) in einem gespannten Zustand gehalten ist und bei aktiviertem Schutzkissen in einem gestreckten Zustand ist und eine begrenzte Entfernung des Außenumfangs des Bezugs oder des Polsters von dem Kopfstützen-Korpus zuläßt. Dadurch kann das Polster vom Schutzkissen an den Kopf angenähert und die Auflagefläche vergrößert werden, ohne den Bezug oder das Polster zu zerstören. Das Polster und/oder der Bezug können nach einer Auslösung wieder in ihre ursprünglichen Positionen zurückgebracht werden.

Weitere Merkmale und Vorteile der Erfindung ergeben sich aus der folgenden Beschreibung und aus den Zeichnungen in denen Ausführungsformen der Erfindung beispielhaft dargestellt und auf die in der Beschreibung Bezug genommen wird. In den Zeichnungen zeigen:
Fig. 1 einen Schnitt durch eine Kopfstütze nach einer ersten Ausführungsform der Erfindung im inaktivierten Zustand;
Fig. 2 einen Schnitt durch die Kopfstütze nach Fig. 1 im aktivierten Zustand;
Fig. 3 einen Schnitt durch eine Kopfstütze nach einer zweiten Ausführungsform der Erfindung im inaktivierten Zustand;
Fig. 4 eine Ansicht der Kopfstütze nach Fig. 3 von der Rückseite;
Fig. 5 einen Schnitt durch eine Kopfstütze nach einer dritten Ausführungsform der Erfindung im inaktivierten Zustand;
Fig. 6 die Kopfstütze nach Fig. 5 im aktivierten Zustand;
Fig. 7a die Ansicht einer Kopfstütze nach einer vierten Ausführungsform der Erfindung von schräg vom;
Fig. 7b eine Ansicht der Kopfstütze aus Fig. 7a von schräg hinten im inaktivierten Zustand;
Fig. 7c einen Schnitt durch die Kopfstütze aus Fig. 7a;
Fig. 7d eine Ansicht der Kopfstütze aus Fig. 7a im aktivierten Zustand;
Fig. 7e einen Schnitt durch die Kopfstütze aus Fig. 7a im aktivierten Zustand
Fig 8 einen schematischen Schnitt durch einen Fahrzeugsitz mit einer Aktivierungseinrichtung nach einer ersten Ausführungsform der Erfindung im inaktivierten Zustand der Kopfstütze;
Fig. 9 einen schematischen Schnitt durch den Fahrzeugsitz aus Fig. 8 im aktivierten Zustand der Kopfstütze;
Fig. 10 einen schematischen Schnitt durch einen Fahrzeugsitz mit einer Aktivierungseinrichtung nach einer zweiten Ausführungsform der Erfindung im inaktivierten Zustand; und
Fig. 11 den Fahrzeugsitz aus Fig. 10 im aktivierten Zustand der Kopfstütze.

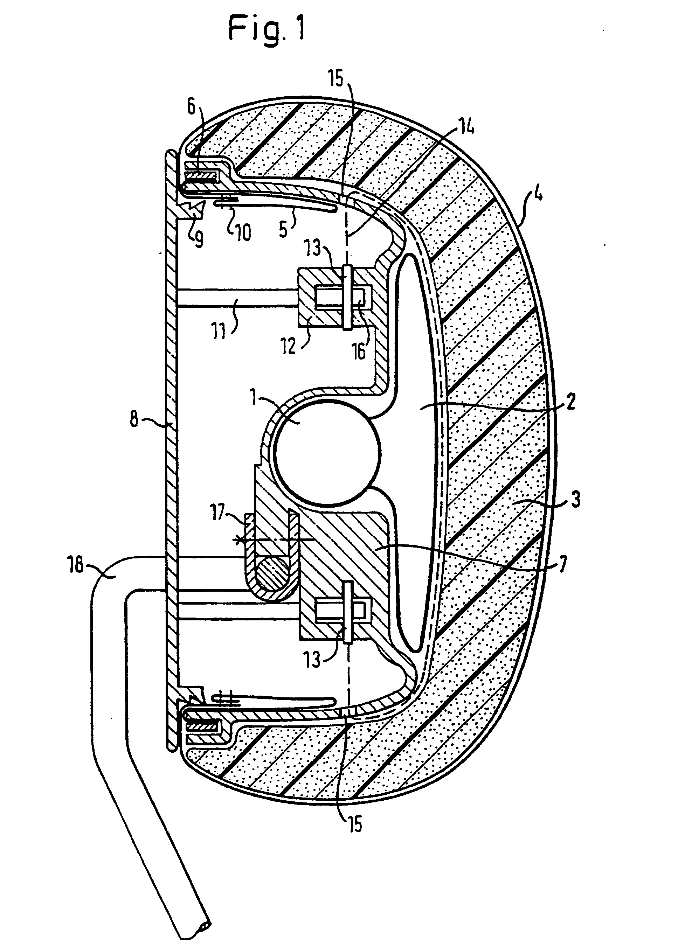

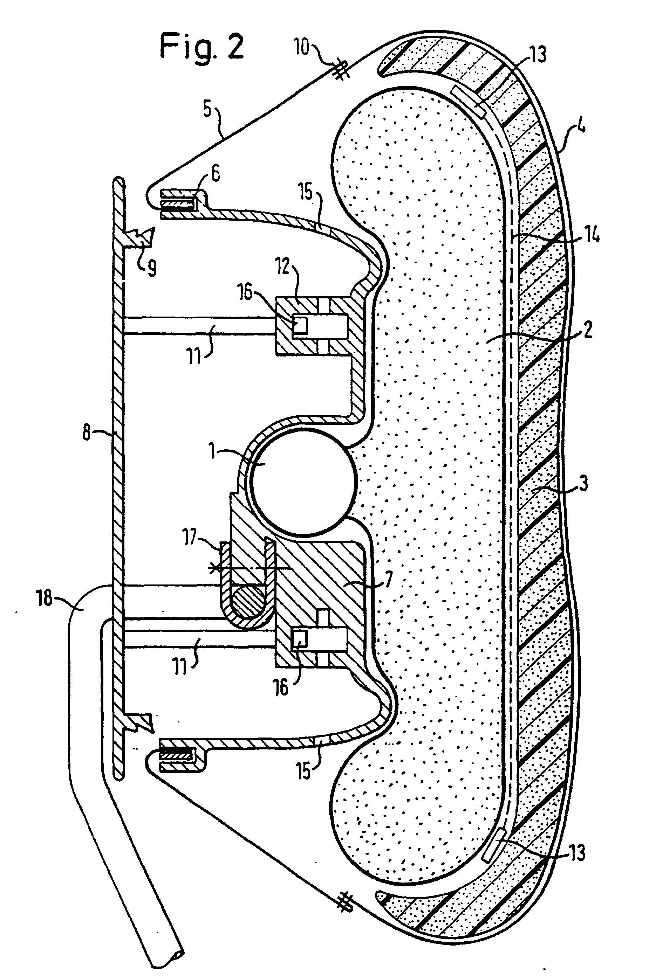

Die in den Fig. 1 und 2 dargestellte Kopfstütze umfaßt eine Gasquelle 1, beispielsweise einen pyrotechnischen Gasgenerator oder eine Druckgaskartusche, und ein aufblasbares Schutzkissen 2, welche zwischen einem Polster 3 und einem Kopfstützen-Korpus 7 vorgesehen sind. Ein Bezug 4 deckt das Polster 3 ab. Der Bezug 4 ist durch ein als Anschlußsaum 5 ausgebildetes Anschlußmittel verlängert, welches in eine Ausnehmung in der Rückseite des Kopfstützen-Korpus 7 cingefaltet und mittels eines Klemmstreifens 6 in einer Nut am Kopfstützen-Korpus 7 befestigt ist. An dem Anschlußsaum 5 ist eine umlaufende Naht 10 angebracht, mittels derer der Anschlußsaum 5 von einem an einer Abdeckung 8 angebrachten Flansch 9 am Kopfstützen-Korpus 7 hintergriffen ist. Die Abdeckung 8 wird am Kopfstützen-Korpus 7 von einer Haltevorrichtung festgehalten, die an der Abdeckung 8 ausgebildete Rasthaken 11 mit jeweils einem Anschlag 16 und am Korpus 7 ausgebildete Dome 12 mit jeweils einem darin verschiebbar geführten Stift 13 umfaßt. Die beiden Stifte 13 sind über Zugmittel 14, beispielsweise ein Zugband, verbunden, welches durch Öffnungen 15 im Korpus 7 geführt ist und zwischen dem Schutzkissen 2 und dem Polster 3 verläuft. Der Korpus 7 ist mit einer Befestigungsklammer 17 an einem Kopfstützen-Bügel 18 befestigt.

Bei einem Heckaufprall wird die Gasquelle 1 ausgelöst, die das Schutzkissen 2 aufbläst. Das sich vergrößernde Schutzkissen 2 zieht mit dem Zugband 14 die Stifte 13 aus den Domen 12. Dadurch werden die Anschläge 16 der Rasthaken 11 freigegeben. Das Schutzkissen erzeugt gleichzeitig über das Polster 3 und den Bezug 4 im Anschlußsaum 5 eine Zugspannung, wodurch die von dem Flansch 9 hintergriffene Naht 10 die Abdeckung 8 nach hinten aus dem Korpus 7 herauszieht, bis die Abdeckung 8 von den Anschlägen 16 der Rasthaken 11 an den Domen 12 festgehalten wird (siehe Fig. 2). Das Schutzkissen 2 bewegt das Polster 3 so lange in Richtung vom Korpus 7 weg, bis der Anschlußsaum 5 vollständig aus der rückseitigen Ausnehmung im Korpus 7 herausgezogen und gestreckt ist. Durch die Ausdehnung des Schutzkissens 2 in vertikaler Richtung wird gleichzeitig das Polster 3 gestreckt und somit die Auflagefläche für die Kopf vergrößert.

Es ist also klar ersichtlich, daß durch die Aktivierung der Kopfstütze weder der Bezug, noch das Polster beschädigt wird, da keine Reißnähte vorgesehen sind. Um die Kopfstütze wieder einsatzfähig zu machen, müssen lediglich die Gasquelle 1 und eventuell das Schutzkissen 2 ausgetauscht werden. Alle anderen Bauteile können auf leichte Weise wieder in den Ursprungszustand zurückversetzt werden, indem die Schlaufe 5 wieder in die rückseitige Ausnehmung im Korpus 7 der Kopfstütze eingefaltet, die Stifte wieder eingefädelt und die Abdeckung 8 wieder aufgesteckt wird. Durch die Arretierung der Abdeckung 8 mittels der Anschläge 16 an den Rasthaken 11 wird eine Gefahr für die Fahrzeuginsassen durch lose Teile vermieden. Anstelle des Polsters 3 mit dem Bezug 4 kann auch ein Polster verwendet werden, bei dem der Bezug in der Oberfläche eingearbeitet ist, oder dessen Oberfläche einen separaten Bezug entbehrlich macht, wobei der Anschlußsaum 5 direkt am Polster befestigt wird.

In der Beschreibung der folgenden Ausführungsformen werden für bereits bekannte Bauteile dieselben Bezugszeichen verwendet, so daß für die betreffenden Bauteile auf die vorhergehende Beschreibung verwiesen werden kann.

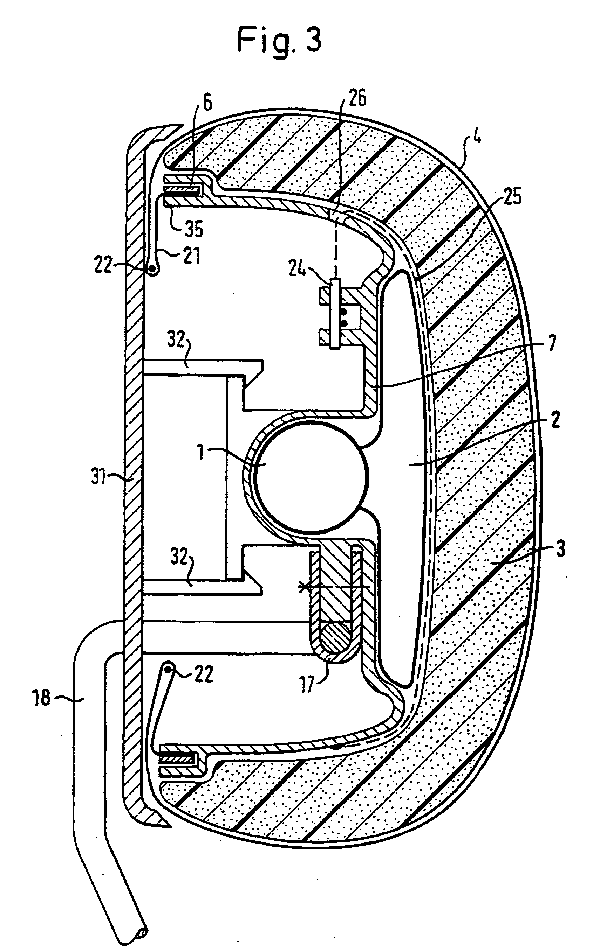

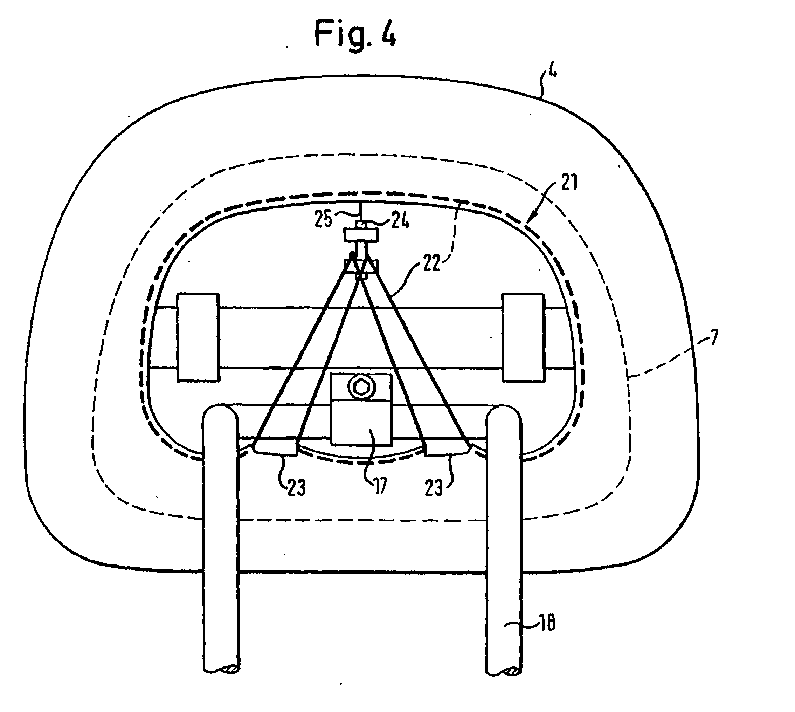

Bei der in den Fig. 3 und 4 dargestellten Kopfstütze ist der Bezug 4 über das Ende des Polsters 3 hinaus verlängert und mittels der Klemmleiste 6 direkt in der Nut am Kopfstützen-Korpus 7 befestigt. Der Bezug 4 bildet eine Schlaufe 21, welche durch ein darin verlaufendes Zugmittel in Form einer Spannschnur 22 unter Spannung gehalten wird. Die Spannschnur 22 ist an zwei Öffnungen 23 der Schlaufe 21 herausgeführt und um einen Stift 24 geschlungen, der in einer Ausformung am Korpus 7 verschiebbar gelagert ist. An dem Stift 24 ist ein Zugmittel 25, beispielsweise ein Band, angebracht, welches durch eine Öffnung 26 im Korpus zwischen dem Schutzkissen 2 und dem Polster 3 geführt und an seinem anderen Ende am Korpus 7 befestigt ist. Die rückseitige Ausnehmung des Korpus 7 ist mit einer Abdeckung 31 verschlossen, welche durch Rasthaken 32 am Korpus 7 befestigt ist. Bei einer Auslösung der Gasquelle 1 wird durch das Aufblasen des Schutzkissens 2 der Stift 24 aus seiner Führung gezogen und gibt das Spannseil 22 frei. Dadurch kann die Schlaufe 21 aufgelöst und das Polster, wie bei Fig. 1 beschrieben, gestreckt und vom Korpus wegbewegt werden.

Neben den bei Fig. 1 beschriebenen, bietet diese Ausführungsform noch den Vorteil, daß die Abdeckung 31 an dem Korpus 7 verbleibt und die Kopfstütze somit auch im ausgelösten Zustand rückseitig eine geschlossene Oberfläche aufweist. Die Schlaufe 21 kann auch durch einen am Bezug 4 oder am Polster direkt angenähten Anschlußsaum gebildet werden, wozu sich vorteilhaft ein preiswerteres Material verwenden läßt.

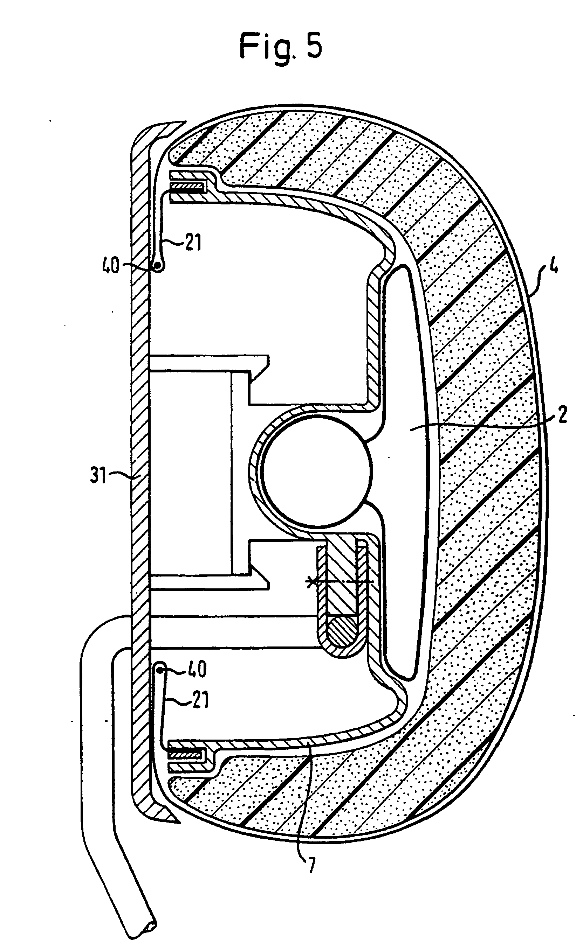

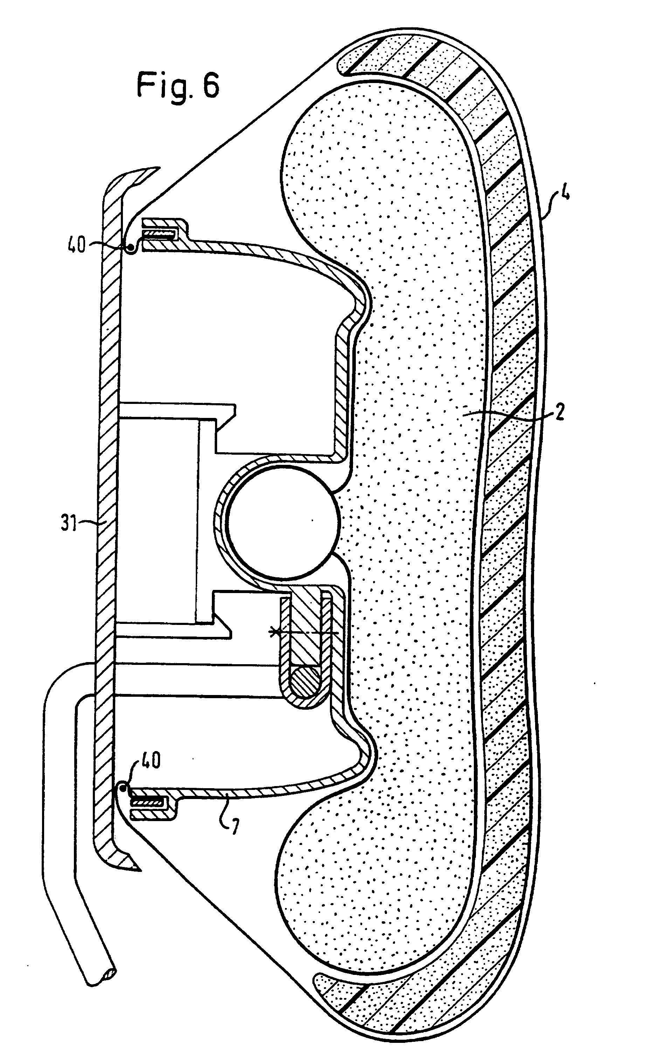

Bei der in den Fig. 5 und 6 dargestellten Kopfstütze wird die Schlaufe 21 durch ein elastisches Zugmittel 40 unter Spannung gehalten. Dieses elastische Zugmittel kann beispielsweise ein Schraubenfederband sein, das beim Aufblasen des Schutzkissens 2 durch die Spannung im Bezug 4 gedehnt wird, so daß das Polster 3 gestreckt und vom Korpus 7 wegbewegt werden kann. Nach Absinken des Drucks im Schutzkissen 2 wird die Schlaufe 21 des Bezugs 4 durch die Spannung des Schraubenfederbandes wieder unter die Abdeckung 31 gezogen, so daß die Polsterung wieder ihre ursprüngliche Form annimmt. Besonders vorteilhaft ist bei dieser Ausführungsform, daß die Kopfstütze von selbst wieder in ihre Ausgangsform zurückkehrt.

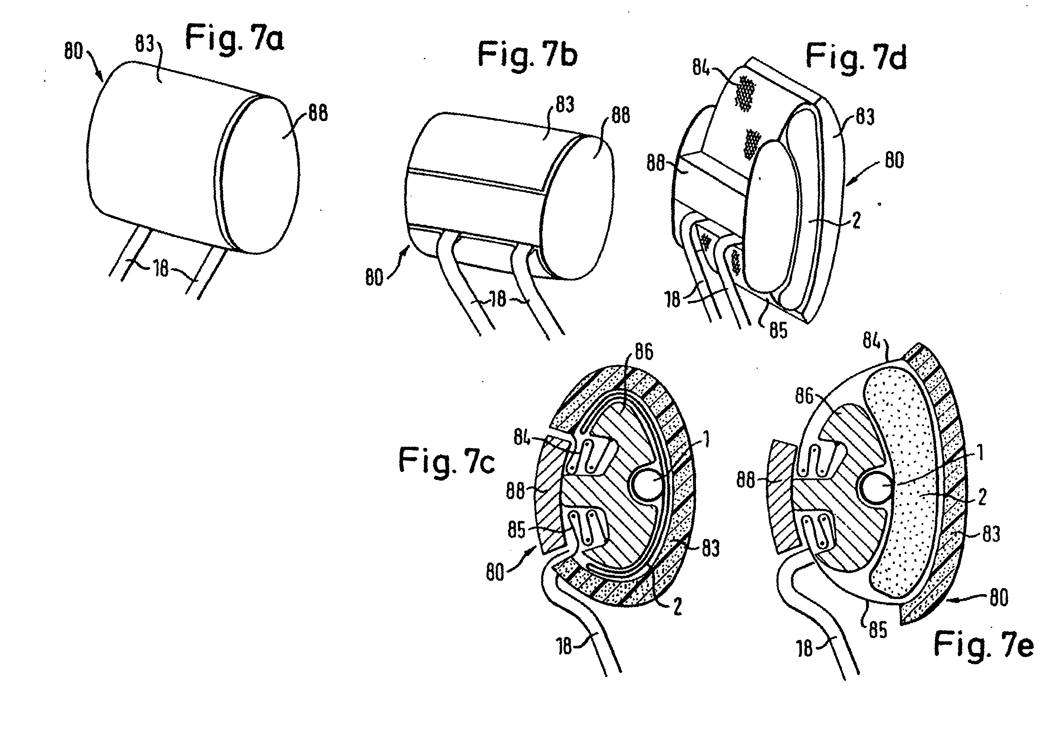

In den Fig. 7a bis 7e ist eine Kopfstütze 80 nach einer vierten Ausführungsform der Erfindung zu sehen, bei der das Polster aus einem feststehenden Teil 88 und einem beweglichen Teil 83 besteht. Der bewegliche Teil 83 des Polsters umschließt die Kopfstütze im nichtaktivierten Zustand (Fig. 7a, 7b und 7c) zum überwiegenden Teil. Das obere und das untere Ende des beweglichen Teils 83 des Polsters sind durch jeweils ein elastisches Gewebe 84, 85 mit dem Korpus 86 der Kopfstütze verbunden. Dieses elastische Gewebe 84, 85 ist in einer Ausnehmung im Korpus 86 untergebracht und dort in Schlaufen über Umlenkstäbe geführt. Im aktivierten Zustand (Fig. 7d und 7e) wird das Polsterteil 83 durch das aufgeblasene Schutzkissen 2, wie vorher beschrieben, gestreckt und vom Korpus 86 wegbewegt, wobei das elastische Gewebe 84, 85 gedehnt wird. Nach dem Absinken des Drucks im Schutzkissen 2 wird das Polster durch die Spannung in dem elastischen Gewebe 84, 85 wieder in seine Ausgangslage zurückgezogen. Dadurch daß das Band 84, 85 in Schlaufen um die Umlenkstäbe geführt ist, wird eine ausreichende Länge des elastischen Bandes 84, 85 bereitgestellt, welche die erforderliche Dehnung für den Weg des Polsterteils 83 erlaubt.

Bei dieser Ausführungsform sind keine zusätzlichen Spannmittel erforderlich. Auch eine separate Abdeckung an der Rückseite erübrigt sich, da die Kopfstütze durch die Polsterteile 83 und 88 im inaktiven Zustand vollkommen umschlossen wird. Dies hat den weiteren Vorteil, daß die Kopfstütze rundum eine geschlossene und gepolsterte Oberfläche aufweist. Anstelle des in Schlaufen gelegten elastischen Bandes ist es auch möglich, eine oder mehrere Zugfedern zu verwenden, wobei allerdings Ober- und Unterkante des beweglichen Polsters 83 an den Befestigungspunkten der Federn verstärkt werden müssen.

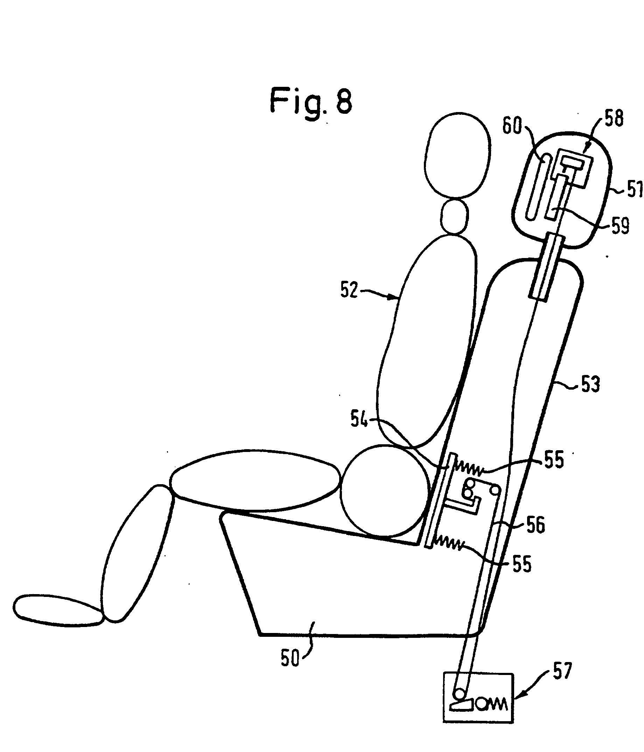

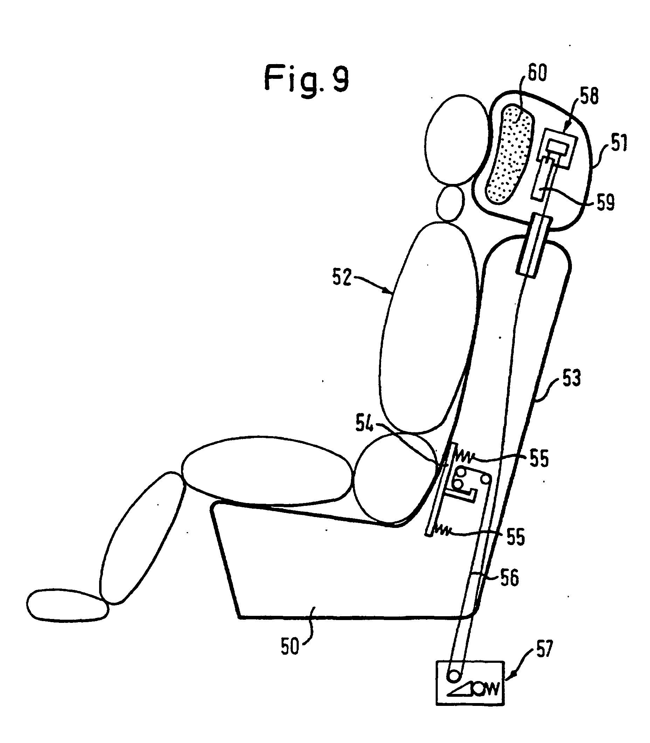

Die Fig. 8 und 9 zeigen einen Fahrzeugsitz 50 mit einer Rückenlehne 53 und einer Kopfstütze 51. Die Kopfstütze umfaßt ein aufblasbares Schutzkissen 60 und eine Gasquelle 59, die durch eine Aktivierungseinrichtung ausgelöst wird. Die Aktivierungseinrichtung weist einen Öffnungsmechanismus 58, einen als Druckplatte ausgebildeten Drucksensor 54 und einen Beschleunigungssensor 57 auf, welche durch ein Zugmittel 56, beispielsweise ein Drahtseil oder einen Bowdenzug, miteinander verbunden sind. Ein Fahrzeuginsasse 52, der im Fahrzeugsitz 50 Platz genommen hat, wird im Fall eines Heckaufpralls aufgrund seiner Massenträgheit an die Rückenlehne 53 gedrückt und verschiebt dabei die Druckplatte 54 entgegen der Kraft von Rückstellfedern 55. Der Beschleunigungssensor 57 gibt das Zugseil 56 erst dann frei, wenn die Beschleunigung dem Wert bei einem Heckaufprall entspricht, so daß die Bewegung der Trägerplatte dann über das Zugseil in den Öffnungsmechanismus 58 weitergeleitet wird, welcher die Gasquelle 59, beispielsweise eine Gaskartusche, öffnet um damit das Schutzkissen 60 aufzublasen. Durch die Funktion des Beschleunigungssensors 57 wird das Zugmittel 56 festgeklemmt, wenn kein Heckaufprall detektiert ist, so daß sich die Gasquelle durch alleiniges Eindrücken der Druckplatte 54 nicht auslösen läßt, was beispielsweise der Fall wäre, wenn sich ein Fahrzeuginsasse kräftig in den Sitz fallen ließe.

Die Erfindung schafft somit auch eine Aktivierungseinrichtung für eine aufblasbare Kopfstütze ohne elektronische oder pyrotechnische Komponenten, welche eine Auslösung zuverlässig verhindert, wenn kein Heckaufprall vorliegt oder der betreffende Sitz nicht besetzt ist. Durch das Fehlen elektronischer und pyrotechnischer Komponenten ist die Einrichtung nicht von einer externen Energieversorgung abhängig und weniger störanfällig. Es ist jedoch durchaus möglich, zum Aufblasen des Schutzkissens alternativ einen pyrotechnischen Gasgenerator zu verwenden.

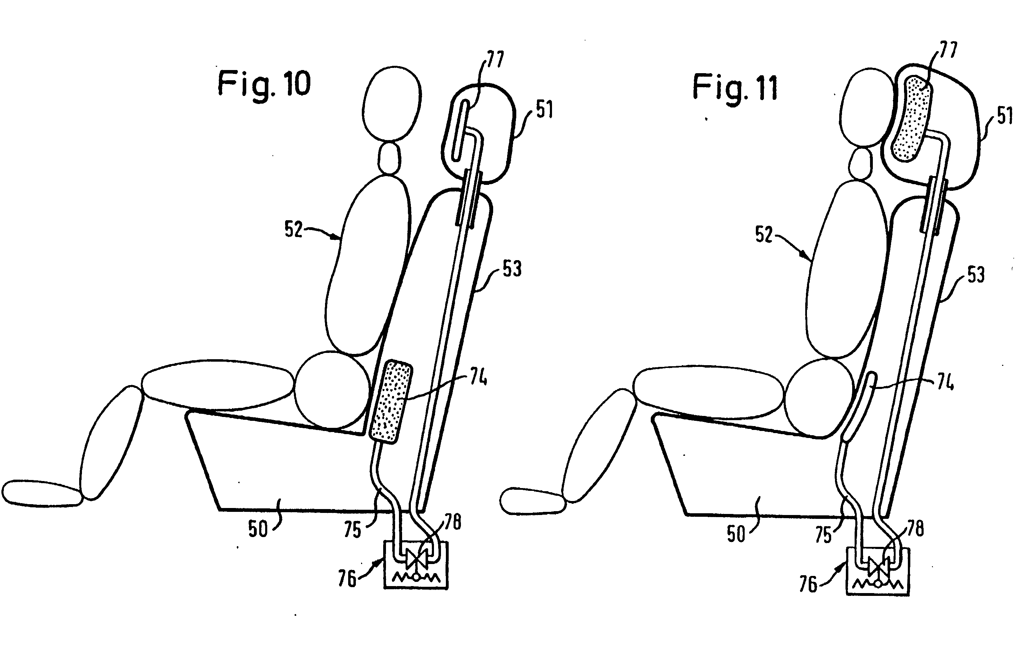

In den Fig. 10 und 11 ist der Drucksensor als Gasblase 74 in der Rückenlehne 53 ausgeführt, die durch eine Schlauchleitung 75 über den Beschleunigungssensor 76 mit dem aufblasbaren Schutzkissen 77 in der Kopfstütze 51 verbunden ist. Der Beschleunigungssensor 76 weist ein Ventil 78 auf, welches die Schlauchleitung 75 solange blockiert, bis eine einem Heckaufprall entsprechende Beschleunigung detektiert ist. Bei einem Heckaufprall (Fig. 11) wird der Fahrzeuginsasse 52 in die Rückenlehne 53 gepreßt und drückt das Gas aus der Gasblase 74 durch die Schlauchleitung 75 über das geöffnete Ventil 78 in das Schutzkissen 77, welches dadurch aufgeblasen wird und wie zuvor beschrieben durch Vergrößerung und Annäherung der Kopfstütze seine Schutzwirkung entfalten kann. Durch die in den Fig. 8 bis 11 beschriebene Aktivierungseinrichtung wird auch verhindert, daß das Schutzkissen 77 in der Kopfstütze 51 aufgeblasen wird, wenn der betreffende Sitz unbesetzt ist.

Auch diese Ausführungsform ist durch das Fehlen elektronischer und pyrotechnischer Komponenten nicht von einer externen Energieversorgung abhängig und wegen der geringeren Zahl mechanischer Bauteile noch einfacher und damit weniger störanfällig. Es kann hier jedoch ebenfalls zum Aufblasen des Schutzkissens alternativ ein pyrotechnischer Gasgenerator Verwendung finden.

## Patentansprüche

1. Kopfstütze mit einem aufblasbaren Schutzkissen (2), das bei einem Heckaufprall aktiviert wird, einem Kopfstützen-Korpus (7), einem Polster (3) und einem das Polster (3) abdeckenden Bezug (4), wobei das Schutzkissen (2) zwischen Kopfstützen-Korpus (7) und Polster (3) angeordnet ist und der Bezug (4) an seinem Außenumfang über einen ringförmigen Anschlußsaum (5; 21) mit dem Kopfstützen-Korpus (7) verbunden ist, wobei der Anschlußsaum (5; 21) mit seinem Innenrand am Außenumfang des Bezugs (4) anschließt und mit seinem Außenrand am Kopfstützen-Korpus (7; 86) befestigt ist,
**dadurch gekennzeichnet, daß**
der Anschlußsaum (5; 21) bei inaktiviertem Schutzkissen (2) durch Spannmittel (22; 40) in einem gespannten Zustand gehalten ist und bei aktiviertem Schutzkissen (2) in einem gestreckten Zustand ist und eine begrenzte Entfernung des Außenumfangs des Bezugs (4) von dem Kopfstützen-Korpus (7) zuläßt.

2. Kopfstütze mit einem aufblasbaren Schutzkissen (2), das bei einem Heckaufprall aktiviert wird, einem Kopfstützen-Korpus (7; 86), einem Polster (3; 83), wobei das Schutzkissen (2) zwischen Kopfstützen-Korpus (7; 86) und Polster (3; 83) angeordnet ist und das Polster (3; 83) an seinem Außenumfang über einen ringförmigen Anschlußsaum (5; 21; 84; 85) mit dem Kopfstützen-Korpus (7; 86) verbunden ist, wobei der Anschlußsaum (5; 21; 84; 85) mit seinem Innenrand am Außenumfang des Polsters (3; 83) anschließt und mit seinem Außenrand am Kopfstützen-Korpus (7; 86) befestigt ist,
**dadurch gekennzeichnet, daß**
der Anschlußsaum (5; 21) bei inaktiviertem Schutzkissen (2) durch Spannmittel (22; 40) in einem gespannten Zustand gehalten ist und bei aktiviertem Schutzkissen in einem gestreckten Zustand ist und eine begrenzte Entfernung des Außenumfangs des Polsters (3; 83) von dem Kopfstützen-Korpus (7; 86) zuläßt.

3. Kopfstütze nach Anspruch 1 oder 2, **dadurch gekennzeichnet, daß** der Anschlußsaum (5; 21; 84, 85) innerhalb der Kopfstütze angeordnet ist.

4. Kopfstütze nach einem der vorhergehenden Ansprüche, **dadurch gekennzeichnet, daß** der Anschlußsaum (84; 85) aus einem elastisch dehnbaren Material besteht.

5. Kopfstütze nach Anspruch 3, **dadurch gekennzeichnet, daß** als Spannmittel auf der Rückseite des Korpus (7) eine Abdeckung (8) vorgesehen ist, die von einer Haltevorrichtung (11, 12, 13, 16) am Korpus (7) festgehalten wird,
und daß der Anschlußsaum (5) zwischen dem Korpus (7) und der Abdeckung (8) eingeklemmt ist.

6. Kopfstütze nach Anspruch 5, **dadurch gekennzeichnet, daß** die Abdeckung (8) an der dem Korpus (7) zugewandten Seite einen umlaufenden Flansch (9) aufweist, der in eine in der Rückseite des Korpus (7) ausgebildete Ausnehmung eingreift,
und daß der Anschlußsaum (5) eine, insbesondere durch eine Naht (10) gebildete Verdickung aufweist, an welcher der Flansch (9) angreift.

7. Kopfstütze nach Anspruch 1 oder 2, **dadurch gekennzeichnet, daß** am Anschlußsaum (21) mindestens zwei Schlaufen ausgebildet sind,
daß als Spannmittel ein Zugmittel (22) vorgesehen ist, das durch die Schlaufen geführt ist,
und daß das Zugmittel (22) weiter über eine Haltevorrichtung (24, 25) am Korpus (7) geführt ist, welche das Zugmittel (22) unter Spannung hält.

8. Kopfstütze nach Anspruch 5, 6 oder 7, **dadurch gekennzeichnet, daß** die Haltevorrichtung (11, 12, 13, 16; 24, 25) mindestens einen Haltestift (13; 24) aufweist, der in einer Aufnahme am Korpus (7) lösbar gehalten ist, und ein Zugmittel (14; 25), welches zwischen der Polsterung (3) und dem Schutzkissen (2) verläuft, beim Aufblasen des Schutzkissens (2) an den Haltestift (13; 24) angreift und diesen aus der Aufnahme (12; 24) löst, wobei die Haltevorrichtung geöffnet wird.

9. Kopfstütze nach Anspruch 1 oder 2, **dadurch gekennzeichnet, daß** am Anschlußsaum Schlaufen (21) ausgebildet sind,
und daß als Spannmittel ein ringförmiges elastisches Zugmittel (40) vorgesehen ist, das durch diese Schlaufen (21) geführt ist.

## Claims

1. A headrest comprising an inflatable protective cushion (2) that is activated in case of a rear-end impact, a headrest frame member (7), an upholstery (3) and a cover (4) covering the upholstery (3), the protective cushion (2) being arranged between the headrest frame member (7) and the upholstery (3), and the cover (4) being joined at its outer circumference by an annular jointing hem (5; 21) to the headrest frame member (7), the jointing hem (5; 21) adjoining the outer circumference of the cover (4) by its inner edge and being secured to the headrest frame member (7; 86) by its outer edge,
**characterized in that**
the jointing hem (5; 21) is maintained in a tensioned condition by tensioning means (22; 40) in the non-activated condition of the protective cushion (2) and is in a straightened condition and permits a limited displacement of the outer circumference of the cover (4) from the headrest frame member (7) in the activated condition of the protective cushion (2).

2. A headrest comprising an inflatable protective cushion (2) that is activated in case of a rear-end impact, a headrest frame member (7; 86), an upholstery (3; 83), the protective cushion (2) being arranged between the headrest frame member (7; 86) and the upholstery (3; 83), and the upholstery (3; 83) being joined at its outer circumference by an annular jointing hem (5; 21; 84; 85) to the headrest frame member (7; 86), the jointing hem (5; 21; 84; 85) adjoining the outer circumference of the upholstery (3; 83) by its inner edge and being secured to the headrest frame member (7; 86) by its outer edge,
**characterized in that**
the jointing hem (5; 21) is maintained in a tensioned condition by tensioning means (22; 40) in the non-activated condition of the protective cushion (2) and is in a straightened condition and permits a limited displacement of the outer circumference of the upholstery (3; 83) from the headrest frame member (7; 86) in the activated condition of the protective cushion.

3. The headrest as set forth in claim 1 or 2, **characterized in that** the jointing hem (5; 21; 84, 85) is arranged within the headrest.

4. The headrest as set forth in any of the preceding claims, **characterized in that** the jointing hem (84; 85) consists of an elastically stretchable material.

5. The headrest as set forth in claim 3, **characterized in that** a cover (8) is provided as the tensioning means on the rear side of the frame member (7), the cover (8) being held in place on the frame member (7) by a holding device (11, 12, 13, 16),
and that the jointing hem (5) is clamped in place between the frame member (7) and the cover (8).

6. The headrest as set forth in claim 5, **characterized in that** the cover (8) includes at the side facing the frame member (7) a surrounding flange (9) engaging a recess configured in the rear side of the frame member (7),
and that the jointing hem (5) has a thickened portion formed in particular by a seam (10), the thickened portion being engaged by the flange (9).

7. The headrest as set forth in claim 1 or 2, **characterized in that** at least two loops are configured at the jointing hem (21),
that a traction means (22) guided by the loops is provided as the tensioning means,
and that the traction means (22) is further guided on the frame member (7) by a holding device (24, 25) which maintains the traction means (22) tensioned.

8. The headrest as set forth in claim 5, 6 or 7, **characterized in that** the holding device (11, 12, 13, 16; 24, 25) includes at least one holding pin (13; 24) releasably held in place in a recess in the frame member (7), and a traction means (14; 25) extending between the upholstery (3) and the protective cushion (2) engages the holding pin (13; 24) on inflation of the protective cushion (2) to release it from the recess (12; 24), the holding device being opened in the process.

9. The headrest as set forth in claim 1 or 2, **characterized in that** loops (21) are configured on the jointing hem,
and that an annular elastic traction means (40) is provided as the tensioning means and is guided by these loops (21).

## Revendications

1. Appuie-tête comportant un coussin de protection gonflable (2) qui est activé en cas de collision arrière, un corps d'appuie-tête (7), un rembourrage (3) et un revêtement (4) recouvrant le rembourrage (3), le coussin de protection (2) étant agencé entre le corps (7) d'appuie-tête, et le rembourrage (3) et le revêtement (4) étant relié sur sa périphérie extérieure au corps d'appuie-tête (7) par l'intermédiaire d'une lisière de raccordement (5 ; 21), la lisière de raccordement (5 ; 21) se raccordant avec son bord intérieur à la périphérie extérieure du revêtement (4) et étant fixée avec son bord extérieur au corps d'appuie-tête (7 ; 86),
**caractérisé en ce que**
lorsque le coussin de protection (2) est inactivé, la lisière de raccordement (5 ; 21) est retenue dans un état de tension par des moyens de tension (22 ; 40) et, lorsque le coussin de protection (2) est activé, elle est dans un état d'extension et elle permet un éloignement limité de la périphérie extérieure du revêtement par rapport au corps d'appuie-tête (7).

2. Appuie-tête comportant un coussin de protection gonflable (2) qui est activé en cas de collision arrière, un corps d'appuie-tête (7 ; 86), un rembourrage (3 ; 83), le coussin de protection (2) étant agencé entre le corps (7 ; 86) d'appuie-tête et le rembourrage (3 ; 83), et le rembourrage (3 ; 83) étant relié sur sa périphérie extérieure au corps d'appuie-tête (7 ; 86) par l'intermédiaire d'une lisière de raccordement (5 ; 21 ; 84 ; 85) de forme annulaire, la lisière de raccordement (5 ; 21 ; 84 ; 85) se raccordant avec son bord intérieur à la périphérie extérieure du rembourrage (3 ; 83) et étant fixé avec son bord extérieur au corps d'appuie-tête (7 ; 86),
**caractérisé en ce que**
lorsque le coussin de protection (2) est inactivé, la lisière de raccordement (5 ; 21) est retenue dans un état de tension par des moyens de tension (22 ; 40) et, lorsque le coussin de protection (2) est activé, elle est dans un état d'extension et elle permet un éloignement limité de la périphérie extérieure du rembourrage (3 ; 83) par rapport au corps d'appuie-tête (7 ; 86).

3. Appuie-tête selon la revendication 1 ou 2, **caractérisé en ce que** la lisière de raccordement (5 ; 21 ; 85 ; 85) est agencée à l'intérieur de l'appuie-tête.

4. Appuie-tête selon l'une des revendications précédentes, **caractérisé en ce que** la lisière de raccordement (84 ; 85) est en un matériau élastiquement extensible.

5. Appuie-tête selon la revendication 3, **caractérisé en ce qu'**il est prévu à titre de moyen de tension sur la face arrière du corps (7) un couvercle (8) qui est maintenu par un dispositif de maintien (11, 12, 13, 16) sur le corps (7),
et **en ce que** la lisière de raccordement (5) est serrée entre le corps (7) et le couvercle.

6. Appuie-tête selon la revendication 5, **caractérisé en ce que** le couvercle (8) présente sur la face tournée vers le corps (7) une bride (9) périphérique qui s'engage dans un évidement réalisé dans la face arrière du corps (7), et **en ce que**
la lisière de raccordement (5) présente un renflement formé en particulier par une couture (10), sur lequel s'applique la bride (9).

7. Appuie-tête selon la revendication 1 ou 2, **caractérisé en ce qu'**au moins deux boucles sont réalisées sur la lisière de raccordement (21),
**en ce qu'**il est prévu à titre de moyen de tension un moyen de traction (22) qui est mené par les boucles,
et **en ce que** le moyen de traction (22) est en outre guidé sur le corps (7) par l'intermédiaire d'un dispositif de maintien (24, 25) qui maintient le moyen de traction (22) sous tension.

8. Appuie-tête selon l'une des revendications 5, 6 ou 7, **caractérisé en ce que** le dispositif de maintien (11, 12, 13, 16 ; 24, 25) présente au moins une goupille de retenue (13 ; 24) qui est maintenue amovible dans un logement sur le corps (7), et un moyen de traction (14 ; 25) qui passe entre le rembourrage (3) et le coussin de protection (2), qui s'engage sur la goupille de retenue (13 ; 24) lors du gonflage du coussin de protection (2) et qui détache celle-ci hors du logement (12 ; 24) en ouvrant le dispositif de maintien.

9. Appuie-tête selon la revendication 1 ou 2, **caractérisé en ce que** des boucles (21) sont réalisées sur la lisière de raccordement,
et **en ce qu'**il est prévu à titre de moyen de tension un moyen de traction (40) élastique en forme de bague qui est mené par ces boucles (21).
